# EUROPEAN PATENT APPLICATION

(11) **EP 4 311 847 A1**
(43) Date of publication of application: **31.01.2024**
(21) Application number: 22187262.5
(22) Date of filing: 27.07.2022
(51) Int. Cl.: C09K 11/02, C09K 11/77

(54) **COMPOSITE LUMINESCENT PARTICLES**

(71) Applicant: Seaborough IP I B.V., 1098 XG Amsterdam (NL)
(72) Inventor: Sontakke, Atul Dnyaneshwar, 1094 EA AMSTERDAM (NL); Khanin, Vasilii Mikhailovich, 1096 HV AMSTERDAM (NL); Montanarella, Federico, 3581 LG UTRECHT (NL); Berends, Anne Claire, 3551 TJ UTRECHT (NL); Van de Haar, Marie Anne, 1381 HL WEESP (NL)
(74) Representative: Hoyng Rokh Monegier B.V.

(57) **Abstract**

The invention provides a composite luminescent particle comprising (i) a first luminescent material which is a rare-earth, s2-configuration ion or transition metal doped phosphor material, (ii) a second luminescent material which is a rare-earth, s2-configuration ion or transition metal doped phosphor material, and further comprising (iii) a coating of an oxide material having a melting point of 700 °C or higher, wherein the D₅₀ value of said composite luminescent particle is ≥ 1 nm and ≤ 100 µm, as measured using transmission electron microscopy (TEM), and a method for obtaining such particles.

## Description

### FIELD OF THE INVENTION

The invention relates to composite luminescent particles. The invention further relates to methods of making composite luminescent particles. The invention further relates to luminescent compositions comprising coated luminescent particles, and methods of making said luminescent compositions. The invention further relates to devices comprising the composite luminescent particles of the invention, or the luminescent compositions of the invention.

### BACKGROUND OF THE INVENTION

Luminescent down-conversion materials play an important role in solid-state lighting devices for illumination and display applications, among others. Such materials may also be used as taggants, for example in security inks.

WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

Non-radiative energy transfer (sometimes also referred to as Fluorescent Resonance Energy Transfer, FRET) from the sensitizer material to the light emitting material involves the non-radiative transfer of energy from an excited sensitizer ion in the sensitizer material to an acceptor (or emitter) ion in the light emitting material. It is evidenced by increased emission from an emitter ion in the light emitting material upon selective excitation of the sensitizer ion in the sensitizer material.

Nanomaterials are of interest due to their high surface area and small volume, which enables to arrange luminescent materials close in space to harness inter-particle FRET.

To be able to effectively harness inter-particle FRET, it is desirable to have very small size (<10 nm) luminescent particles. However, suitable nanomaterials may have poor quality (chemical, stability, optical and/or physical) due to their small size and poor crystallinity. This can be overcome through (pre-)baking or annealing the nanomaterials, but this generally results in larger or aggregated particles. Such larger or aggregated particles mix less well, resulting in poor inter-particle FRET. When annealing pre-mixed nanomaterials, quenching may occur.

Thus, there remains a need for luminescent nanomaterials having improved quality and stability at small sizes. Further, there is a need for luminescent compositions exhibiting high photoluminescence quantum yield (QY) and improved stability, and for methods for the preparation thereof.

### SUMMARY OF THE INVENTION

According to the invention, there is provided a composite luminescent particle comprising (i) a first luminescent material which is a rare-earth, s2-configuration ion or transition metal doped phosphor material, (ii) a second luminescent material which is a rare-earth, s2-configuration ion or transition metal doped phosphor material, and further comprising (iii) a coating of an oxide material having a melting point of 700 °C or higher, wherein the D₅₀ value of said composite luminescent particle is ≥ 1 nm and ≤ 100 µm, as measured using transmission electron microscopy (TEM).

According to the invention, there is further provided a luminescent composition, comprising (i) a first luminescent material which is a rare-earth, s2-configuration ion or transition metal doped phosphor material, (ii) a second luminescent material which is a rare-earth , s2-configuration ion or transition metal doped phosphor material, wherein at least one of said first luminescent material or said second luminescent material is coated with (iii) an oxide material having a melting point of 700 °C or higher, and wherein the D₅₀ value of said coated material is ≥ 1 nm and ≤ 100 µm, as measured using transmission electron microscopy (TEM).

The composite luminescent particles and luminescent compositions according to the invention show good absorption/emission properties and high photoluminescence quantum yield (QY). Luminescent compositions of the invention or comprising the particles of the invention, show non-radiative energy transfer (sometimes also referred to as Fluorescent Resonance Energy Transfer, FRET). The composite luminescent particles may also show internal FRET.

The oxide material having a melting point of 700 °C or higher used for encapsulation (e.g. silica) may improve the optical performance of the individual particles themself. By tuning shell thickness the IFRET performance of the materials, and therefore the luminescent properties (e.g. excitation and emission wavelengths) of the composite luminescent particles and the luminescent compositions, can be adapted as well. Also, the oxide material may prevent ion diffusion between the luminescent materials. In a certain embodiment, the oxide material may also be doped with luminescent ions.

According to the invention, there is further provided a method for obtaining composite luminescent particles, comprising the steps of:
a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
b) mixing said first luminescent material or said precursor thereof, said second luminescent material or said precursor thereof, and said precursor of an oxide material,
c) curing said precursor of said oxide material to obtain a cured particle, said cured particle comprising said first luminescent material or said precursor thereof, said second luminescent material or said precursor thereof, and a coating of said oxide material, and
d) heating said cured particle at at least 200 °C.

The method according to the invention allows obtaining the composite luminescent particles according to the invention.

There is further provided a method for obtaining a luminescent composition, comprising the steps of:
a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
b) mixing said second luminescent material or said precursor thereof, and said precursor of an oxide material,
c) curing said precursor of said oxide material to obtain a cured particle, said cured particle comprising said second luminescent material or said precursor thereof, and a coating of said oxide material,
d) mixing said cured particle with said first luminescent material or said precursor thereof, wherein said first luminescent material or said precursor thereof is optionally coated with an oxide material having a melting point of at least 700 °C, and
e) heating said mixture at at least 200 °C,
wherein said first luminescent material is capable of emitting light in a first wavelength range, and said second luminescent material being capable of absorbing light in a second wavelength range, and having an emission spectrum which overlaps at least partly with one or more of the excitation bands of said first luminescent material.

The method of the invention allows to obtain the luminescent compositions of the invention.

### BRIEF DESCRIPTION OF THE FIGURES

FIGURE 1 shows schematically two composite luminescent particles according to the invention (a, b) and a luminescent composition according to the invention.
FIGURE 2 shows photoluminescence spectra of mixtures of LaPO₄:50%Tb and Y₂O₃:15%Eu nanoparticles according to Comparative Example A (dotted line) and Comparative Example B (dashed line), under Tb³⁺ excitation (350 nm). The dotted line represents 1:1 weight ratio and the dashed line represents 3:1 weight ratio of LaPO₄:50%Tb and Y₂O₃:15%Eu nanoparticles, respectively, in the mixture.
FIGURE 3 shows photoluminescence spectra of Y₂O₃:15%Eu particles according to Example 1 (solid line) and untreated Y₂O₃:15%Eu nanoparticles (dotted line). Excitation at 533 nm.
FIGURE 4 shows photoluminescence spectra of YAG:1%Ce nanoparticles according to Example 2. Excitation at 450 nm.
FIGURE 5 shows photoluminescence spectra of particles according to Example 3, comprising LaPO₄:50%Tb and Y₂O₃:15%Eu nanoparticles (solid line) and the mixture according to Comparative Example B. Excitation at 350 nm.
FIGURE 6 shows photoluminescence spectra of particles according to Example 4, comprising LaPO₄:50%Tb and Y₂O₃:15%Eu nanoparticles (solid line) and the mixture according to Comparative Example B. Excitation at 350 nm.
FIGURE 7 shows photoluminescence spectra of particles according to Example 5, comprising LaPO₄:50%Tb and Y₂O₃:15%Eu nanoparticles (solid line) and the mixture according to Comparative Example B. Excitation at 350 nm.
FIGURE 8 shows photoluminescence spectra of particles according to Example 6 (solid line) and particles according to Example 3 (dotted line). Excitation at 350 nm.
FIGURE 9 shows photoluminescence spectra of particles according to Example 7 (solid line), and Comparative Example D (dotted line). Excitation at 440 nm.
FIGURE 10 shows the photoluminescence spectra of particles according to Example 9 (solid line), Example 10 (dashed line) and Comparative Example E (dotted line). Excitation at 440 nm.

### DETAILED DESCRIPTION OF THE INVENTION

### Composite luminescent nanoparticles

There is provided a composite luminescent particle comprising (i) a first luminescent material which is a rare-earth, s2-configuration ion or transition metal doped phosphor material, (ii) a second luminescent material which is a rare-earth, s2-configuration ion or transition metal doped phosphor material, and further comprising (iii) a coating of an oxide material having a melting point of 700 °C or higher, wherein the Dso value of said composite luminescent particle is ≥ 1 nm and ≤ 100 µm, as measured using transmission electron microscopy (TEM). Dso is defined as the median value of the length of the particles, measured from an ensemble of at least 50 representative particles. The Dso value of said composite luminescent particle is measured including the coating.

The first luminescent material and the second luminescent material are rare-earth, s2-configuration ion or transition metal doped phosphor materials. In this disclosure, a rare-earth, s2-configuration ion or transition metal doped phosphor material is a material that is capable of luminescence, i.e., it emits light when exposed to some type of radiant energy, and is doped with rare-earth metal, s2-configuration ion or transition metal ions. As is known to the skilled person, rare-earth doped phosphor materials comprise a host lattice doped with optically active ions. Rare-earth metal ions are herein defined as the ions of yttrium, scandium, lanthanum, cerium, praseodymium, neodymium, promethium, samarium, europium, gadolinium, terbium, dysprosium, holmium, erbium, thulium, ytterbium and lutetium. Transition metal ions are herein defined as any ion of the d-block of the periodic table, and s2-configuration ions are defined as any ion having a s2 electron configuration. Examples of s2-configuration ions are Ge²⁺, Pb²⁺, and Bi³⁺.

Preferably, the luminescent material is doped with the trivalent ion of at least one of cerium, europium, or terbium. These ions are capable of emitting in the visible spectrum upon suitable excitation, thus making them attractive for lighting.

Preferably, said luminescent material is selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these. These materials form a lattice into which the rare-earth metal ions can be doped.

More preferably, said luminescent material is selected from the group of oxides, garnets, phosphates, vanadates, or a combination thereof. Even more preferably, said luminescent material is selected from the group consisting of Y₃Al₅O₁₂, Lu₃Al₅O₁₂, Y₂O₃, YVPO₄, YVO₄, or LaPO₄, or a combination thereof. These luminescent materials have been found to exhibit desirable optical characteristics.

Preferably, the first luminescent material is an oxide, and the second luminescent material is also an oxide.

Preferably, the first luminescent material is (Lu,Y)₃Al₅O₁₂:Eu³⁺, Y₂O₃:Eu³⁺, optionally further doped with Tb³⁺. These materials are stable and show strong europium emission.

Preferably, the second luminescent material is Y₃Al₅O₁₂:Ce³⁺, Lu₃Al₅O₁₂:Ce³⁺, optionally further doped with Tb³⁺. These materials are stable, show strong cerium emission and can be excited by blue light.

In another preferred embodiment, one of the luminescent materials is a phosphate, and the other luminescent material is an oxide. More preferably, the first luminescent material is Y₂O₃:Eu³⁺ and the second luminescent material is LaPO₄:Tb³⁺.

The composite luminescent particle further comprises a coating of an oxide material having a melting point of 700 °C or higher. The oxide material forms a coating around said first luminescent material and said second luminescent material. This protects the luminescent materials from deterioration from, for example, moisture or heat.

Said oxide material has a melting point of 700 °C or higher. Preferably, the melting point is 900 °C or higher, more preferably 1200 °C or higher. The high melting point allows to process the composite luminescent particles, for example by annealing the luminescent materials, without the composite luminescent particles melting or clumping together. The melting point of the oxide material is therefore preferably higher than the lowest melting point of the luminescent materials.

Preferably, said oxide material is selected from the group of silicon oxides, aluminium oxides, or phosphates. More preferably, said oxide material is selected from the group of silica, alumina, magnesium oxide, and phosphates. These materials are physically, chemically and thermally stable. Preferably, said second material is silica, as this material exhibits good stability. Silica also can be readily dispersed in water and other hydrophilic solvents, thus making the composite luminescent particles suitable for various applications. The oxide material may be doped with luminescent ions in a certain embodiment.

Preferably, the first luminescent material is capable of emitting light in a first wavelength range, and said second luminescent material is capable of absorbing light in a second wavelength range, and has an emission spectrum which overlaps at least partly with one or more of the excitation bands of said first luminescent material. Such composite luminescent particles can show FRET between the two materials.

More preferably, the first luminescent material and the second luminescent material are so arranged to each other to allow non-radiative energy transfer from the second luminescent material to the first luminescent material.

Preferably, the first luminescent material and the second luminescent material form separate domains within the oxide material, wherein said domains have dimensions, and the Dso value of the smallest dimension of said domains is ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). Preferably, the D₅₀ value of the domains is ≥ 0.5 nm and ≤ 100 nm, more preferably ≥ 0.5 nm and ≤ 50 nm, most preferably ≥ 0.5 nm and ≤ 10 nm. The domain size thus does not include the oxide material coating. Domains of such sizes are suited to FRET. Such small domains are desirable, as they have a high surface area. The oxide material forms a stable matrix around said domains, thus preventing ion exchange or quenching. Additionally, the oxide material keeps the domains in place, such that the interdomain distance stays the same, regardless of post-treatment.

Preferably, the D₅₀ value of the composite luminescent particle is ≥ 1 nm and ≤ 50 µm, as measured using transmission electron microscopy. More preferably, said D₅₀ value is ≥ 20 nm and ≤ 10 µm, most preferably ≥ 50 nm and ≤ 10 µm, as measured using transmission electron microscopy (TEM). Smaller particle dimensions of the first luminescent material and second luminescent material allow for interparticle FRET, as well as smaller distances between the luminescent materials due to thinner oxide material coating. Smaller particles also have a higher surface area, which may be desirable.

### Luminescent composition

There is further provided a luminescent composition comprising (i) a first luminescent material which is a rare-earth, s2-configuration ion or transition metal doped phosphor material, (ii) a second luminescent material which is a rare-earth, s2-configuration ion or transition metal doped phosphor material,
wherein at least one of said first luminescent material or said second luminescent material is coated with (iii) an oxide material having a melting point of 700 °C or higher, and wherein the D₅₀ value of said coated particle is ≥ 1 nm and ≤ 100 µm, as measured using transmission electron microscopy (TEM).

Preferably, the first luminescent material is capable of emitting light in a first wavelength range, and said second luminescent material is capable of absorbing light in a second wavelength range, and has an emission spectrum which overlaps at least partly with one or more of the excitation bands of said first luminescent material.

More preferably, the first luminescent material and the second luminescent material so arranged to each other to allow non-radiative energy transfer from the second luminescent material to the first luminescent material.

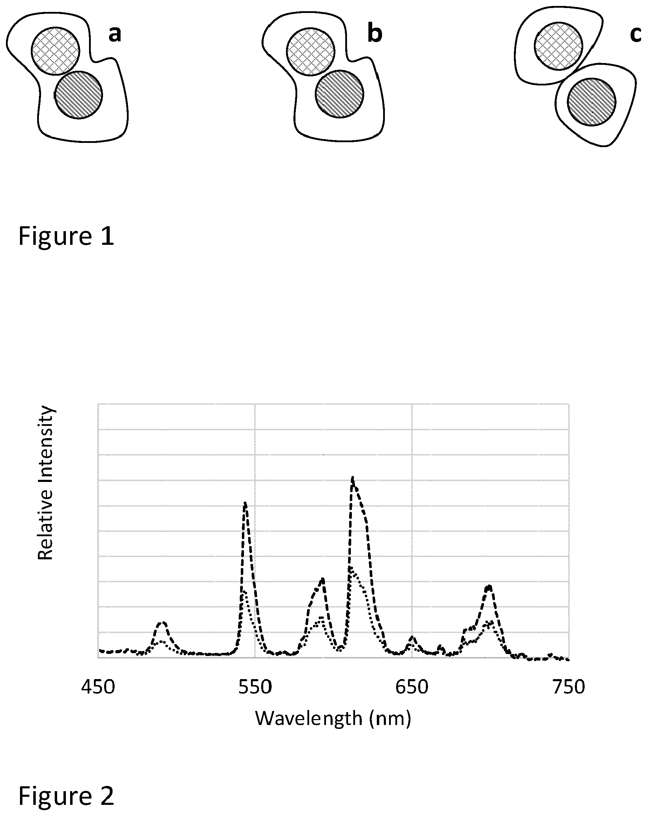

In an embodiment, the luminescent composition comprises the first luminescent material as a particle coated with the oxide material, and the second luminescent material as a particle coated with the oxide material. Due to the oxide material coating the first luminescent material and the second luminescent material, the luminescent particles are allowed to mix better and said luminescent composition is more homogenous. Such a composition is shown in in Figure 1 'c'.

In an embodiment, only one of said first luminescent material or said second luminescent material is comprised in a particle coated with the oxide material. In this case, preferably the D₅₀ value of the smallest dimension of the other luminescent material is preferably ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). Preferably, the D₅₀ value of the other luminescent material is ≥ 0.5 nm and ≤ 100 nm, more preferably ≥ 0.5 nm and ≤ 50 nm, most preferably ≥ 0.5 nm and ≤ 10 nm. In another embodiment, the other luminescent material is provided as a bulk material with the coated particles provided on the bulk luminescent material. In this context the term "bulk" especially means and/or includes greater than nanoscale, for example greater than 100 nm in diameter and including micro-size scales.

### First luminescent material and second luminescent material

Preferably, the first luminescent material is capable of emitting light in a first wavelength range, and the second luminescent material is capable of absorbing light in a second wavelength range, and has an emission spectrum which overlaps at least partly with one or more of the excitation bands of said first luminescent material. For all embodiments where this is the case, the following apply.

The first luminescent material may be capable of emitting light in a first wavelength range. The skilled person will understand that the first luminescent material functions as an emitting material in the luminescent composition according to the invention. The first wavelength range may be any wavelength range of interest. Preferred wavelength ranges will be described hereinafter.

The second luminescent material may be capable of absorbing light in a second wavelength range. The skilled person will understand that the second luminescent material functions as a sensitizer material in the luminescent composition according to the invention. The second wavelength range may be any wavelength range of interest. Preferred wavelength ranges will be described hereinafter.

The second luminescent material has, when excited by light in the second wavelength range, an emission spectrum which overlaps at least partly with one or more excitation bands of said first luminescent material. The skilled person is well able to determine the overlap of the spectra based on spectra known in the art or by determining the spectra by routine experimentation, which is for example disclosed in WO2020/053429.

Preferably, the overlap of said emission spectrum of said second material and one or more excitation bands of said first material is in the blue (440 to 480 nm), green (510 to 560 nm) or yellow (560 to 580 nm) wavelength range.

Preferably, said first luminescent material and said second luminescent material are so arranged to each other to allow non-radiative energy transfer (sometimes also referred to as Fluorescent Resonance Energy Transfer, FRET) from said second luminescent material (sensitizer material) to said first luminescent material (emitter material). Generally, this comprises close proximity between the first and second luminescent materials, for instance from about 0.5 nm to about 20 nm in distance. The skilled person is well aware how non-radiative energy transfer may be achieved. This is, for instance, described in WO2018/167266, the contents of which are herewith incorporated by reference. The skilled person will understand that non-radiative energy transfer involves non-radiative transfer of energy from an excited sensitizer material to an acceptor (or emitter) ion in the emitting material. It is evidenced by increased selective excitation of the sensitizer material resulting in increased emission from an emitter ion in the emitting material. The non-radiative energy transfer of interest may originate from either Förster- or Dexter-type energy transfer. The skilled person will realize that - since resonant energy transfer is in first order inversely proportional to inter-ion distance at the power of 6 (in case of Förster-type energy transfer), or exponentially proportional to the distance (in case of Dexter-type energy transfer) - the arrangement to allow non-radiative energy transfer may be effected by proper engineering of the effective distances between the sensitizer material and the emitter ions in the emitting material.

The skilled person will understand that the first and second material have to be in close proximity for FRET to occur.

### First luminescent material

The first luminescent material is capable of emitting light in a first wavelength range. The first wavelength range may be any wavelength range of interest.

Preferably, the first luminescent material comprises a red or green emitting material. As used herein the term red emitting material refers to a material which, upon suitable excitation, has one or more emission bands between 600 nm and 700 nm and the term green emitting material refers to a material which, upon suitable excitation, has one or more emission bands between 510 and 560 nm. Providing a red or green emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 480 and 510 nm (cyan), between 440 and 480 nm (blue), between 400-440 nm (violet), between 315-400 nm (UV-A), and/or between 280-315 nm (UV-B).

The first luminescent material comprises a rare-earth, s2-configuration ion or transition metal doped phosphor material. The phosphor materials may be divalent or trivalent rare-earth doped phosphors. Examples of suitable rare-earth doped phosphor materials include, but are not limited to: LaPO₄:Eu³⁺ (and/or Tb³⁺), CaAlSiN₃:Eu²⁺, Y₂O₃:Eu³⁺ (and/or Tb³⁺), Y(V,P)O₄:Eu³⁺ (and/or Tb³⁺), Lu₃Al₅O₁₂:Ce³⁺ (or Eu³⁺ and/or Tb³⁺), Y₃Al₅O₁₂:Ce³⁺ (or Eu³⁺ and/or Tb³⁺), and combinations thereof, examples of suitable transition metal doped phosphors are BaMgAl₁₄O₂₃:Mn²⁺, Mg(Al,Ga)₂O₄:Mn²⁺, Zn₂SiO₄:Mn²⁺, K₂SiF₆:Mn⁴⁺, MgF_{2.}GeO₂:Mn⁴⁺, and combinations thereof.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828].

As is known to the skilled person, rare-earth, s2-configuration ion or transition metal doped phosphor materials comprise a host lattice doped with optically active ions.

Preferably, said preferred host lattice of the first luminescent material is doped with one or more ions selected from the group consisting of Eu³⁺, Tb³⁺, Mn²⁺ and Mn⁴⁺. These ions provide good emission characteristics, such as emission bands that are strong and/or in the red or green part of the visible spectrum.

In case of Eu³⁺ doping, the first luminescent material may for example have a host lattice doped having a doping ratio of at least about 1%, more preferably having a doping ratio of between about 5% and about 80%. In case Tb³⁺ doping, the first luminescent material may for example have a host lattice doped having a doping ratio of at least about 10%, more preferably between about 30% and about 80% Tb³⁺. In case of Mn⁴⁺ doping, the first luminescent material may for example have a host lattice doped having a doping ratio of about 0.1-30%, most preferably between about 1-10%. In case of Mn²⁺ doping, the first luminescent material may for example have a host lattice doped having a doping ratio of about 0.1-30%, most preferably between about 1-10%.

In an exemplary embodiment, the first luminescent material is selected from the group consisting of (Ca,Sr)Ga₂O₆:Eu³⁺ (or Tb³⁺), (Ca,Sr,Ba)La₂Bi₂(SiO₄)₃O:Eu³⁺ (or Tb³⁺), (Ca,Sr,Ba)SnO₃:Eu³⁺ (and/or Tb³⁺), (Ca,Y,Gd)MoO₄:Eu³⁺ (or Tb³⁺), (Y,Gd)BO₃ (pseudo-vaterite) :Eu³⁺ (or Tb³⁺), (Y,Tb)SiO₅:Eu³⁺ (or Tb³⁺), A-La₂O₃:Eu³⁺ (or Tb³⁺), Ba₂(SiO₄):O²⁻ :Eu³⁺ (or Tb³⁺), Ba₂MgSi₂O₇:Eu³⁺ (or Tb³⁺), Ba₂Y(BO₃)₂Cl:Eu³⁺ (or Tb³⁺), Ba₃(PO₄)₂:Eu³⁺ (or Tb³⁺), Ba₃Ca₃(PO₄)₄:Eu³⁺ (or Tb³⁺), Ba₃Gd(BO₃)₃:Eu³⁺ (or Tb³⁺), Ba₃Gd₂(BO₃)₄:Eu³⁺ (or Tb³⁺), Ba₃La₂(BO₃)₄:Eu³⁺ (or Tb³⁺), Ba₃V₂O₈:Eu³⁺ (or Tb³⁺), Ba₃Y₂(BO₃)₄:Eu³⁺ (or Tb³⁺), BaB₈O₁₃:Eu³⁺ (or Tb³⁺), BaBPO₅:Eu³⁺ (or Tb³⁺), BaFCl:Eu³⁺ (or Tb³⁺), BaGd₂O₄:Eu³⁺ (or Tb³⁺), BaGd₄Si₅O₁₇:Sm:Eu³⁺ (or Tb³⁺), BaGdB₉O₁₆:Eu³⁺ (or Tb³⁺), BaLaB₉O₁₆:Eu³⁺ (or Tb³⁺), BaSO₄:Eu³⁺ (or Tb³⁺), BaY₂F₈:Yb:Eu³⁺ (or Tb³⁺), BaY₂Si₃O₁₀:Eu³⁺ (or Tb³⁺), BaYB₉O₁₆:Eu³⁺ (or Tb³⁺), BaZr(BO₃)₂:Eu³⁺ (or Tb³⁺), BaZrO₃:Eu³⁺ (or Tb³⁺), BaZrO₃:Eu³⁺ (or Tb³⁺), b-BaB₂O₄:Eu³⁺ (or Tb³⁺), B-Gd₂O₃:Eu³⁺ (or Tb³⁺), Ca₂Al(AlSiO₇) :Eu³⁺ (or Tb³⁺), Ca₂Gd₂(GeO₄)₂O:Eu³⁺ (or Tb³⁺), Ca₂Gd₈(SiO₄)₆O₂:Eu³⁺ (or Tb³⁺), Ca₂Gd₈Si₆O₂₆:Eu³⁺ (or Tb³⁺), Ca₂La₈(SiO₄)₆O₂:Eu³⁺ (or Tb³⁺), Ca₃(BO₃)₂:Eu³⁺ (or Tb³⁺), Ca₃Al₂O₆:Eu³⁺ (or Tb³⁺), Ca₃Gd₂(BO₃)₄:Eu³⁺ (or Tb³⁺), Ca₃La₂(BO₃)₄:Eu³⁺ (or Tb³⁺), Ca₃Y₂(BO₃)₄:Eu³⁺ (or Tb³⁺), Ca₄GdO(BO₃)₃:Eu³⁺ (or Tb³⁺), Ca₅(PO₁₁)₃F:Eu³⁺ (or Tb³⁺), Ca₅(PO₄)₃Br:Eu³⁺ (or Tb³⁺), Ca₅(PO₄)₃F:(4f-site) :Eu³⁺ (or Tb³⁺), Ca₅(PO₄)₃F:(6h-site) :Eu³⁺ (or Tb³⁺), Ca₅(PO₄)₃OH:Eu³⁺ (or Tb³⁺), CaBPO₅:Eu³⁺ (or Tb³⁺), CaF₂:Eu³⁺ (or Tb³⁺), CaLaB₇O₁₃:Eu³⁺ (or Tb³⁺), calcite-CaCO₃:Eu³⁺ (or Tb³⁺), CaO:Eu³⁺ (or Tb³⁺), CaSO₄:Eu³⁺ (or Tb³⁺), CaYO(BO₃):Eu³⁺ (or Tb³⁺), C-Gd₂O₃:Eu³⁺ (or Tb³⁺), C-Lu₂O₃:(C2) :Eu³⁺ (or Tb³⁺), C-Lu₂O₃:(C3i):Eu³⁺ (or Tb³⁺), Cs₂NaYF₆:Tm:Eu³⁺ (or Tb³⁺), Cs₃Ge₃O₉:Eu³⁺, C-Sc₂O₃:Yb:Eu³⁺ (or Tb³⁺), C-Y₂O₃:Eu³⁺ (or Tb³⁺), Eu³⁺ (or Tb³⁺)[(ttfa)3(phen)]0:Eu³⁺ (or Tb³⁺), Gd_{17.33}(BO₃)₄(B₂O₅)₂O₁₆:Eu³⁺ (or Tb³⁺), Gd₂BaZnO₅:Eu³⁺ (or Tb³⁺), Gd₂O₂(SO₄) :Eu³⁺ (or Tb³⁺), Gd₂P₄O₁₃:Eu³⁺ (or Tb³⁺), Gd₃O₄Br:Eu³⁺ (or Tb³⁺), Gd₃PO₇:Eu³⁺ (or Tb³⁺), Gd₃Te₂Li₃O₁₂:Eu³⁺ (or Tb³⁺), Gd₈P₂O₁₇:Eu³⁺ (or Tb³⁺), GdA₁₃ (BO₃)₄:Eu³⁺ (or Tb³⁺), GdAlO₃:Eu³⁺ (or Tb³⁺), GdAlO₃:Eu³⁺ (or Tb³⁺), GdB₃O₆:Eu³⁺ (or Tb³⁺), GdBO₃:Eu³⁺ (or Tb³⁺), GdGaO₃:Eu³⁺ (or Tb³⁺), GdOBr:Eu³⁺ (or Tb³⁺), GdOCl:Eu³⁺ (or Tb³⁺), GdP₃O₉:Eu³⁺ (or Tb³⁺), GdPO₄:Eu³⁺ (or Tb³⁺), I-CaB₂O₄:Eu³⁺ (or Tb³⁺), InBO₃:Eu³⁺ (or Tb³⁺), I-SrB₂O₄:Eu³⁺ (or Tb³⁺), KCaGd(PO₄)₂:Eu³⁺ (or Tb³⁺), La₂₆O₂₇(BO₃)₈:Eu³⁺ (or Tb³⁺), La₂BaZnO₅:Eu³⁺ (or Tb³⁺), La₂Hf₂O₇:Eu³⁺ (or Tb³⁺), La₂O₂(SO₄):Eu³⁺ (or Tb³⁺), La₂O₂S:Eu³⁺ (or Tb³⁺), La₂W₃O₁₂:Eu³⁺ (or Tb³⁺), La₂Zr₃(MoO₄)₉:Eu³⁺ (or Tb³⁺), La₃TaO₄Cl₆:Eu³⁺ (or Tb³⁺), La₃WO₆Cl₃:Eu³⁺ (or Tb³⁺), LaAlO₃:Eu³⁺ (or Tb³⁺), LaB₃O₆:Eu³⁺ (or Tb³⁺), LaBO₃:Eu³⁺ (or Tb³⁺), LaF₃:Eu³⁺ (or Tb³⁺), LaGaO₃:Eu³⁺ (or Tb³⁺), LaMgB₅O₁₀:Eu³⁺ (or Tb³⁺), LaOBr:Eu³⁺ (or Tb³⁺), LaOCl:Eu³⁺ (or Tb³⁺), LaOF:Eu³⁺ (or Tb³⁺), LaOI:Eu³⁺ (or Tb³⁺), LaP₃O₉:Eu³⁺ (or Tb³⁺), LaPO₄:Eu³⁺ (or Tb³⁺), LaYO₃:Eu³⁺ (or Tb³⁺), Li₂Lu₅O₄(BO₃)₃:Eu³⁺ (or Tb³⁺), Li₃Ba₂La₃(MoO₄)₈:Eu³⁺ (or Tb³⁺), Li₃La₂(BO₃)₃:Eu³⁺ (or Tb³⁺), Li₆Gd(BO₃)₃:Eu³⁺ (or Tb³⁺), Li₆Y(BO₃)₃:Eu³⁺ (or Tb³⁺), LiCaAlF₆:Eu³⁺ (or Tb³⁺), LiEu³⁺ (or Tb³⁺), Mo₂O₈:Eu³⁺ (or Tb³⁺), LiGd₆O₅(BO₃)₃:Eu³⁺ (or Tb³⁺), LiGdF₄:Eu³⁺ (or Tb³⁺), LiGdGeO₄:Eu³⁺ (or Tb³⁺), LiGdO₂:Eu³⁺ (or Tb³⁺), LiGdSiO₄:Eu³⁺ (or Tb³⁺), LiLa₂O₂BO₃:Eu³⁺ (or Tb³⁺), LiLaGeO₄:Eu³⁺ (or Tb³⁺), LiLaO₂:Eu³⁺ (or Tb³⁺), LiLaP₄O₁₂:Eu³⁺ (or Tb³⁺), LiLaSiO₄:Eu³⁺ (or Tb³⁺), LiLuGeO₄:Eu³⁺ (or Tb³⁺), LiLuO₂:Eu³⁺ (or Tb³⁺), LiLuSiO₄:Eu³⁺ (or Tb³⁺), LiScO₂:Eu³⁺ (or Tb³⁺), LiSr₂YO₄:Eu³⁺ (or Tb³⁺), LiSrAlF₆:Eu³⁺ (or Tb³⁺), LiY₆O₅(BO₃)₃:Eu³⁺ (or Tb³⁺), LiYF₄:Eu³⁺ (or Tb³⁺), LiYGeO₄:Eu³⁺ (or Tb³⁺), LiYO₂:Eu³⁺ (or Tb³⁺), LiYSiO₄:Eu³⁺ (or Tb³⁺), LU₂O₂(SO₄):Eu³⁺ (or Tb³⁺), Lu₂Si₂O₇:Eu³⁺ (or Tb³⁺), Lu₃Al₅O₁₂:Eu³⁺ (or Tb³⁺), Lu₃Al₅O₁₂:Yb:Eu³⁺ (or Tb³⁺), LuBO₃:Eu³⁺ (or Tb³⁺), LuB03 (calcite):Eu³⁺ (or Tb³⁺), LuOCl:Eu³⁺ (or Tb³⁺), LuPO₄:Eu³⁺ (or Tb³⁺), Mg₂Gd₈(SiO₄)₆O₂:Eu³⁺ (or Tb³⁺), Mg₂La₈(SiO₄)₆O₂:Eu³⁺ (or Tb³⁺), MgO:Eu³⁺ (or Tb³⁺), MgSiO₃:Eu³⁺ (or Tb³⁺), Na₃YSi₃O₉:Eu³⁺ (or Tb³⁺), Na₆Gd(BO₃)₃:Eu³⁺ (or Tb³⁺), NaGdGeO₄:Eu³⁺ (or Tb³⁺), NaGdO₂:Eu³⁺ (or Tb³⁺), NaGdSiO₄:Eu³⁺ (or Tb³⁺), NaLaGeO₄:Eu³⁺ (or Tb³⁺), NaLaO₂:Eu³⁺ (or Tb³⁺), NaLaSiO₄:Eu³⁺ (or Tb³⁺), NaLuGeO₄:Eu³⁺ (or Tb³⁺), NaLuSiO₄:Eu³⁺ (or Tb³⁺), NaScO₂:Eu³⁺ (or Tb³⁺), NaSrLa(VO₄)₂:Eu³⁺ (or Tb³⁺), NaYGeO₄:Eu³⁺ (or Tb³⁺), NaYSiO₄:Eu³⁺ (or Tb³⁺), ScBO₃:Eu³⁺ (or Tb³⁺), ScOCl:Eu³⁺ (or Tb³⁺), ScPO₄:Eu³⁺ (or Tb³⁺), Sr₂B₂O₅:Eu³⁺ (or Tb³⁺), Sr₂Gd₈(SiO₄)₆O₂:Eu³⁺ (or Tb³⁺), Sr₂La₂Zn₂O₇:Eu³⁺ (or Tb³⁺), Sr₂La₂Zn₂O₇:Eu³⁺ (or Tb³⁺), Sr₂LaAlO₅:Eu³⁺ (or Tb³⁺), Sr₃(BO₃)₂:Eu³⁺ (or Tb³⁺), Sr₃(PO₄)₂:Eu³⁺ (or Tb³⁺), Sr₃(PO₄)₂:Sm:Eu³⁺ (or Tb³⁺), Sr₃Gd₂(BO₃)₄:Eu³⁺ (or Tb³⁺), Sr₃La₂(BO₃)₄:Eu³⁺ (or Tb³⁺), Sr₃La₆(SiO₄)₆:Eu³⁺ (or Tb³⁺), Sr₃Y₂(BO₃)₄:Eu³⁺ (or Tb³⁺), Sr₅(PO₄)₃F:Eu³⁺ (or Tb³⁺), Sr₉Ln(VO₄)₇:Eu³⁺ (or Tb³⁺), SrAl₂B₂O₇:Eu³⁺ (or Tb³⁺), SrB₄O₇:Eu³⁺ (or Tb³⁺), SrB₆O₁₀:Eu³⁺ (or Tb³⁺), SrCO₃:Eu³⁺ (or Tb³⁺), SrGdAlO₄:Eu³⁺ (or Tb³⁺), SrHfO₃:Tm:Eu³⁺ (or Tb³⁺), SrLa₂BeO₅:(4c):Eu³⁺ (or Tb³⁺), SrLa₂BeO₅:(8d):Eu³⁺ (or Tb³⁺), SrLaAlO₄:Eu³⁺ (or Tb³⁺), SrLaGa₃O₇:Eu³⁺ (or Tb³⁺), SrLaO(BO₃):Eu³⁺ (or Tb³⁺), SrO:Eu³⁺ (or Tb³⁺), SrY₂O₄:(Sr-site):Eu³⁺ (or Tb³⁺), SrY₂O₄:(Y-site1):Eu³⁺ (or Tb³⁺), SrY₂O₄:(Y-site2):Eu³⁺ (or Tb³⁺), Tb₂Mo₃O₁₂:Eu³⁺ (or Tb³⁺), Tb₂W₃O₁₂:Eu³⁺ (or Tb³⁺), TbBO₃:Eu³⁺ (or Tb³⁺), ThO₂:Eu³⁺ (or Tb³⁺), X1-Gd₂SiO₅:Eu³⁺ (or Tb³⁺), X1-Y₂SiO₅:Eu³⁺ (or Tb³⁺), X2-Y₂SiO₅:Eu³⁺ (or Tb³⁺), Y_{17.33}(BO₃)₄(B₂O₅)₂O₁₆:Eu³⁺ (or Tb³⁺), Y₂Ge₂O₇:Eu³⁺ (or Tb³⁺), Y₂GeO₅:Eu³⁺ (or Tb³⁺), Y₂O₂(SO₄):Eu³⁺ (or Tb³⁺), Y₂O₂S:Eu³⁺ (or Tb³⁺), Y₂O₂S:Eu³⁺ (or Tb³⁺), Y₂O₃:Eu³⁺ (or Tb³⁺), Y₂P₄O₁₃:Eu³⁺ (or Tb³⁺), Y₂Si₂O₇:Eu³⁺ (or Tb³⁺), Y₂SiO₅:Eu³⁺ (or Tb³⁺), Y₃Al₅O₁₂:Eu³⁺ (or Tb³⁺), Y₃O₄Br:Eu³⁺ (or Tb³⁺), Y₃O₄Cl:Eu³⁺ (or Tb³⁺), Y₃PO₇:Eu³⁺ (or Tb³⁺), Y₄GeO₈:Eu³⁺ (or Tb³⁺), Y₈P₂O₁₇:Eu³⁺ (or Tb³⁺), YAl₃(BO₃)₄:Eu³⁺ (or Tb³⁺), YAlO₃:Eu³⁺ (or Tb³⁺), YBO₃:Eu³⁺ (or Tb³⁺), YbOBr:Yb:Eu³⁺ (or Tb³⁺), YF₃:Eu³⁺ (or Tb³⁺), YOBr:Eu³⁺ (or Tb³⁺), YOCl:Eu³⁺ (or Tb³⁺), YOCl:Eu³⁺ (or Tb³⁺), YOF:Eu³⁺ (or Tb³⁺), YOF:Eu³⁺ (or Tb³⁺), YP₃O₉:Eu³⁺ (or Tb³⁺), YPO₄:Eu³⁺ (or Tb³⁺), YTaO₄:Eu³⁺ (or Tb³⁺), YVO₄:Eu³⁺ (or Tb³⁺), ZrP₂O₇:Eu³⁺ (or Tb³⁺), Y₃Al₅O₁₂:Ce³⁺, Lu₃Al₅O₁₂:Ce³⁺ or mixtures thereof.

The skilled person will understand that the notation :Eu³⁺ (or :Tb³⁺ or :Ce³⁺ or :Mn²⁺ or :Mn⁴⁺) indicates that the host lattice is doped with Eu³⁺ (or with Tb³⁺, or with Ce³⁺ or with Mn²⁺ or with Mn⁴⁺).

### Second luminescent material

Any suitable inorganic luminescent material may be used as second luminescent material. The second material is capable of absorbing light in a second wavelength range. The second wavelength may be any wavelength range of interest.

Preferably, the second luminescent material has one or more excitation bands in the wavelength range between 300 to 580 nm, preferably wherein said second luminescent material has one or more excitation bands in the UV-A (315 to 400 nm), violet (400 to 440 nm), blue (440 to 490 nm) or green (510 to 560 nm) wavelength range, most preferably in the blue (440 to 490 nm) wavelength range. LEDs based on (Al,In,Ga)N provide efficient "pump" light generation in the violet to blue wavelength range (about 400 nm to about 490 nm). Examples of blue-excitable materials are CaAlSiN₃:Eu²⁺ and Y₃Al₅O₁₂:Ce³⁺.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In another preferred embodiment, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), LaPO₄, MgF₂, CaF₂, Sr₂SiO₄, Ba₂SiO₄, Ca₂MgSi₂O₇, LiSrPO₄, CaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺ in combination with Tb³⁺, most preferably Ce³⁺ in combination with Tb³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, in the case of Ce³⁺ doping, the second luminescent material has a host lattice doped at a level of about 0.05-5%, more preferably about 0.1-4%.

### Method for obtaining composite luminescent particles

There is further provided a method for obtaining composite luminescent particles. The method comprises the steps of:
a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
b) mixing said first luminescent material or said precursor thereof, said second luminescent material or said precursor thereof, and said precursor of an oxide material,
c) curing said precursor of said oxide material to obtain a cured particle, said cured particle comprising said first luminescent material or said precursor thereof, said second luminescent material or said precursor thereof, and a coating of said oxide material, and
d) heating said cured particle at at least 200 °C.

The method allows to obtain the composite luminescent particle of the invention.

Step a) comprises providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C.

The luminescent materials are rare-earth, s2-configuration ion or transition metal doped phosphor materials as defined above.

Preferably, the luminescent materials, or said precursors thereof, is provided as particles, wherein the D₅₀ value of the smallest dimension of said particles is ≥ 0.5 nm and ≤ 100 nm. This allows to obtain the domains within the matrix of the oxide material.

Preferably, the D₅₀ value of the smallest dimension of said particles of the luminescent material or said precursor thereof is ≥ 0.5 nm and ≤ 50 nm, more preferably ≥ 0.5 nm and ≤ 10 nm, as measured using transmission electron microscopy (TEM). Preferably, the D₅₀ value of said particles of the luminescent material or said precursor thereof is ≥ 0.5 nm and ≤ 50 nm, more preferably ≥ 0.5 nm and ≤ 10 nm. Smaller particles allow to obtain smaller domains within the composite luminescent particle, which allows for better FRET.

Preferably, at least one of said first luminescent material or said second luminescent material is A₃B₅O₁₂:RE garnet nanoparticles, wherein A is one or more of yttrium, lutetium and gadolinium, B is one or more of aluminum, gallium, and scandium, and RE is a rare-earth metal, and said garnet nanoparticles may be prepared according to a method known in the art selected from:
a. a glycothermal method, more preferably as described in Odziomek et al. J. Mater. Chem. C 2017, 5, 12561,
b. a precipitation method, more preferably as described in EP21215315, which is incorporated herein by reference,
c. a two-step precipitation method, more preferably as described in EP21218015, which is incorporated herein by reference, or
d. any other method described in for example Berends et al. Chem. Rev. 2020, 120, 24, 13461-13479, or elsewhere in the art.

Step b) comprises mixing said first luminescent material or said precursor thereof, said second luminescent material or said precursor thereof, and said precursor of an oxide material.

The oxide material is preferably as defined above.

Preferably, said oxide precursor is selected from the groups of organosilicates, silicon salts, aluminium salts, magnesium salts, and phosphate salts.

More preferably said oxide precursor is selected from silicon salts, aluminium salts, magnesium salts, and phosphate salts, and said salts are selected from nitride salts or chloride salts. More preferably, said precursor is an ester of orthosilicic acid.

In one embodiment, said mixing of step b) is performed by simply adding said precursor of said oxide material to a dispersion of the luminescent material or said precursor thereof. Preferably, said dispersion medium is a water/ethanol mixture. Preferably, said approach is according to the Stöber reaction.

In another embodiment, said mixing is performed by first preparing a water-in-oil microemulsion, wherein the luminescent material is in the core of the droplets, followed by addition of TEOS to the microemulsion. An example of such an approach is described in Koole, R.; van Schooneveld, M.M.; Hilhorst, J.; de Mello Donegá, C.; 't Hart, D.C.; van Blaaderen, A.; Vanmaekelbergh, D.; Meijerink, A. Chem. Mater. 2008, 20, 2503-2512.

Preferably, step b) comprises agitation. This allows the luminescent material to stay in the dispersion and the precursor of the oxide material to be evenly distributed.

Preferably, after step b), but before step c), the mixture is further agitated, for example by ultrasonication. This further ensures even distribution of the precursor of the oxide material, and a good dispersion of the luminescent material.

The distance between the domains of luminescent material inside the oxide material can be tuned by varying the method steps b) and c). This allows tuning depending on the material. A precise tuning of interparticle separation among the first luminescent material and the second luminescent material in the final composite luminescent particle gives control over energy transfer efficiency, thus a good control over the final luminescence spectral color.

Figure 1 shows how the distance may be tuned in various ways: the embodiment 'a' shows a composite luminescent particle wherein the domains of luminescent materials are nearly touching. The embodiment 'b' shows a larger distance between the domains, however still in the same composite luminescent particle. Embodiment 'c' shows two particles, wherein each contains one luminescent material, allowing for an even larger distance.

In an embodiment, the method step b) is performed in a single step such that a single mixture is formed. This results in the least amount of the distance between the domains. Tuning of the distance between the different domains is crucial since it allows for controlling the desirable energy transfer (smaller distances give higher energy transfer efficiencies), but also quenching effects (e.g. charge transfer quenching, for which there is less quenching for larger distances).

In an embodiment, the method step b) comprises:
- mixing in a first vessel said first luminescent material or said precursor thereof with said precursor of an oxide material, and in a second vessel mixing said second luminescent material or said precursor thereof with said precursor of an oxide material, and
- mixing said mixtures.

Mixing the luminescent materials separately with said precursor of an oxide material allows to tune the distance between the luminescent materials in the final particle. This embodiment therefore provides a medium amount of distance between the domains.

In an embodiment, the method step b) comprises:
b1) mixing in a first vessel said first luminescent material or said precursor thereof with said precursor of an oxide material, and in a second vessel mixing said second luminescent material or said precursor thereof with said precursor of an oxide material,
b2) at least partly curing at least one of said resultant mixtures,
b3) mixing said at least partly cured mixtures.

This results in even more distance between the domains.

Step c) comprises curing said precursor of said oxide material to obtain a cured particle, said cured particle comprising said first luminescent material or said precursor thereof, said second luminescent material or said precursor thereof, and a coating of said oxide material.

Such curing can for example be performed by a condensation or hydrolysis reaction. Preferably, said curing is a hydrolysis reaction. More preferably, said curing is performed by addition of ammonia solution.

Preferably, said curing is performed in a slow manner, and/or during agitation. This prevents clumping together of the particles. For example, ammonia solution may be added dropwise under constant stirring.

Preferably, the method further comprises drying the cured particles. More preferably, the method comprises drying the cured particles at a temperature of 80 °C to 125 °C.

Preferably, the method further comprising drying the cured particles at 80 to 125°C, and grinding the dried particles after curing step c), and/or grinding the particles after heating step d).

Step d) comprises heating said cured particle at at least 200 °C. This allows to remove crystal defects in the luminescent materials. In the case of a precursor of a luminescent material, this step allows to form said luminescent material.

The oxide material coating provides a protective barrier to prevent ion diffusion between the luminescent materials during the high temperature annealing steps, and passivates surface defects on the domains of the luminescent material. Both effects lead to higher luminescence intensities.

Preferably, said heating is at least partly performed under reducing atmosphere. Reducing atmosphere is when oxidation is prevented. Preferably, the reducing atmosphere comprises carbon monoxide. Reducing atmosphere conditions may be obtained by using carbon powder in a double crucible setting, where the crucible with the cured particles is placed inside a bigger crucible with carbon powder in it and covered with a lid.

Preferably, said heating said cured particle comprises heating at a temperature of at least 500 °C, preferably at least 600 °C, and preferably at a temperature of less than 2000 °C, more preferably of less than 1500 °C.

Preferably, said heating said cured particle comprising heating at a temperature lower than the melting temperature of the oxide coating layer.

When the first luminescent material and the second luminescent material are Y₂O₃, Y₃Al₅O₁₂, and/or Lu₃Al₅O₁₂, the heating temperature is preferably at least 900 °C. Preferably for such materials, the cured particles are heated for at least 2 hours, more preferably 6 hours.

When the first luminescent material and/or the second luminescent material comprise phosphate materials such as LaPO₄, the heating temperature is preferably at most 800 °C. Higher temperatures may cause degradation of the phosphate materials. Preferably for such materials, the cured particles are heated for at least 1 minute, preferably for several hours.

The invention further relates to a method for obtaining a luminescent composition, comprising the steps of:
a) providing a first luminescent material, which is a rare-earth, s2-configuration ion or transition metal doped phosphor material, or a precursor of said first luminescent material; a second luminescent material, which is a rare-earth, s2-configuration ion or transition metal doped phosphor material, or a precursor of said second luminescent material; and further providing a precursor of an oxide material, wherein said oxide material has a melting point of at least 700 °C,
b) mixing one of said first luminescent material or said precursor thereof and said second luminescent material or said precursor thereof, and said precursor of an oxide material,
c) curing said precursor of said oxide material to obtain a cured particle, said cured particle comprising one of said first luminescent material or said precursor thereof and said second luminescent material or said precursor thereof, and a coating of said oxide material,
d) mixing said cured particle with the other luminescent material or said precursor thereof, wherein said other luminescent material or said precursor thereof is optionally coated with an oxide material having a melting point of at least 700 °C, and
e) heating said mixture at at least 200 °C,
wherein said first luminescent material is capable of emitting light in a first wavelength range, and said second luminescent material being capable of absorbing light in a second wavelength range, and having an emission spectrum which overlaps at least partly with one or more of the excitation bands of said first luminescent material.

The method allows to obtain the luminescent composition of the invention.

This method differs from the method for obtaining composite luminescent particles in that the first luminescent material and the second luminescent material are not comprised in a single composite luminescent particle.

The step a) of the methods of the invention is the same, and thus the same preferred embodiments apply as described above.

Step b) comprises mixing one of said first luminescent material or said precursor thereof and said second luminescent material or said precursor thereof, and said precursor of an oxide material.

The oxide material is preferably as defined above, and said precursor is as defined above.

In one embodiment, said mixing of step b) is performed by simply adding said precursor of said oxide material to a dispersion of the second luminescent material or said precursor thereof. Preferably, said dispersion medium is a water/ethanol mixture. Preferably, said approach is according to the Stöber reaction.

In another embodiment, said mixing is performed by first preparing a water-in-oil microemulsion, wherein the second luminescent material is in the core of the droplets, followed by addition of TEOS to the microemulsion. An example of such an approach is described in Koole, R.; van Schooneveld, M.M.; Hilhorst, J.; de Mello Donegá, C.; 't Hart, D.C.; van Blaaderen, A.; Vanmaekelbergh, D.; Meijerink, A. Chem. Mater. 2008, 20, 2503-2512.

Preferably, step b) comprises agitation. This allows the luminescent material to stay in the dispersion and the precursor of the oxide material to be evenly distributed.

Preferably, after step b), but before step c), the mixture is further agitated, for example by ultrasonication. This further ensures even distribution of the precursor of the oxide material, and a good dispersion of the luminescent material.

Step c) comprises curing the precursor of said oxide material. Preferably, said curing is a hydrolysis reaction. More preferably, said curing is performed by addition of ammonia solution.

Preferably, said curing is performed in a slow manner, and/or during agitation. This prevents clumping together of the particles. For example, ammonia solution may be added dropwise under constant stirring.

Preferably, the method further comprises drying the cured particles. More preferably, the method comprises drying the cured particles at a temperature of 80 °C to 125 °C.

Preferably, the method further comprising drying the cured particles at 80-125°C and grinding the dried particles after curing step c) and/or grinding the particles after heating step e).

Mixing step d) can be performed by any method known in the art, e.g. by dry-mixing, or dispersing in a liquid followed by drying.

Heating step e) is preferably performed as described above for heating step d).

Preferably, said heating said mixture comprises mixing the mixture with a salt prior to heating, as described in WO2021043762. This allows to protect the first luminescent material, which may be uncoated.

In an embodiment, said other luminescent material or said precursor thereof is coated with an oxide material having a melting point of at least 700 °C. This allows to obtain the embodiment of Figure 1 'c'.

Separation of the luminescent particles or domains can further be tuned by changing the ratio between the amount of luminescent particles or precursors thereof and the amount of precursor for the oxide coating material.

The invention further relates to a light-emitting device comprising the composite luminescent particles of the invention, or the luminescent composition of the invention. Preferably the light-emitting device further comprises an excitation source for the luminescent material, such as for the second luminescent material. Preferably the excitation sources is a UV-A, violet, or blue light emitting material which emits light towards the luminescent material with a wavelength of 315-400 nm (UV-A), 400-440 nm (violet), or 440-480 nm (blue), more preferably between 430-465 nm.

The light emitting device may be constructed from a blue emitting LED with the luminescent nanoparticles or luminescent composition according to the inventions deposited on top of the LED chip. The nanoparticles according to the invention may be bound in a polymer or silicone slurry that is deposited on the blue LED chip and subsequently cured.

The invention further relates to a lighting system comprising a light emitting device according to the invention. Preferably, the lighting system is selected from the group consisting of a lamp or luminaire, office lighting systems, household application systems, shop lighting systems, home lighting systems, accent lighting systems, spot lighting systems, theatre lighting systems, fibre-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention further relates to the use of luminescent compositions according to the invention or luminescent materials comprising the luminescent nanoparticles of the invention as a taggant. A taggant is a marker added to materials to allow various forms of testing. The overall excitation/emission spectra of the composite luminescent particles and/or luminescent compositions according to the invention may have unique signatures, compared to conventional approaches, such that they may be useful as taggants in anti-counterfeiting applications. For instance, US7667828B discloses a tagging system containing multiple types of taggants that differ from each other.

The invention is further defined in the following clauses:
1. A composite luminescent particle comprising (i) a first luminescent material which is a rare-earth, s2-configuration ion or transition metal doped phosphor material, (ii) a second luminescent material which is a rare-earth, s2-configuration ion or transition metal doped phosphor material, and further comprising (iii) a coating of an oxide material having a melting point of 700 °C or higher,
   wherein the Dso value of said composite luminescent particle is ≥ 1 nm and ≤ 100 µm, as measured using transmission electron microscopy (TEM).
2. The composite luminescent particle according to clause 1, wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material,
   preferably wherein the first luminescent material and the second luminescent material are so arranged to each other to allow non-radiative energy transfer from the second luminescent material to the first luminescent material.
3. The composite luminescent particle according to clause 2, wherein the first luminescent material and the second luminescent material form separate domains within the oxide material, wherein said domains have dimensions, and the Dso value of the smallest dimension of said domains is ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM).
4. The composite luminescent particle according to any preceding clause, wherein the Dso value of the composite luminescent particle is ≥ 1 nm and ≤ 50 µm, more preferably ≥ 20 nm and ≤ 10 µm, most preferably ≥ 50 nm and ≤ 10 µm, as measured using transmission electron microscopy (TEM).
5. A luminescent composition, comprising (i) a first luminescent material which is a rare-earth or transition metal, s2-configuration ion doped phosphor material, (ii) a second luminescent material which is a rare-earth or transition metal, s2-configuration ion doped phosphor material,
   wherein at least one of said first luminescent material or said second luminescent material is comprised in a particle coated with (iii) an oxide material having a melting point of 700 °C or higher, and wherein the Dso value of said coated particle is ≥ 1 nm and ≤ 100 µm, as measured using transmission electron microscopy (TEM),
   preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material,
   more preferably wherein the first luminescent material and the second luminescent material so arranged to each other to allow non-radiative energy transfer from the second luminescent material to the first luminescent material.
6. The composite luminescent particle of any of clauses 1 to 4, or the luminescent composition of clause 5, wherein said first luminescent material and/or said second luminescent material is selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these,
   preferably selected from the group of oxides, phosphates, vanadates, or a combination thereof, more preferably selected from the group consisting of Y₃Al₅O₁₂, Lu₃Al₅O₁₂, Y₂O₃, YVPO₄, YVO₄, or LaPO₄, or a combination thereof.
7. The composite luminescent particle of any of clauses 1 to 4 or 6, or the luminescent composition of clauses 5 or 6, wherein the oxide material is selected from the group of silicon oxides, aluminium oxides, phosphates, or magnesium oxide.
8. A method for obtaining composite luminescent particles, comprising the steps of:
   a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
   b) mixing said first luminescent material or said precursor thereof, said second luminescent material or said precursor thereof, and said precursor of an oxide material,
   c) curing said precursor of said oxide material to obtain a cured particle, said cured particle comprising said first luminescent material or said precursor thereof, said second luminescent material or said precursor thereof, and a coating of said oxide material, and
   d) heating said cured particle at at least 200 °C.
9. The method according to clause 8, wherein said first luminescent material is capable of emitting light in a first wavelength range, and said second luminescent material being capable of absorbing light in a second wavelength range, and having an emission spectrum which overlaps at least partly with one or more of the excitation bands of said first luminescent material.
10. The method according to clause 8 or 9, wherein the method step b) is performed in a single step such that a single mixture is formed.
11. The method according to clauses 8 or 9, wherein the method step b) comprises:
   b1) mixing in a first vessel said first luminescent material or said precursor thereof with said precursor of an oxide material, and in a second vessel mixing said second luminescent material or said precursor thereof with said precursor of an oxide material,
   b2) optionally, at least partly curing at least one of said resultant mixtures,
   b3) mixing said optionally at least partly cured mixtures.
12. A method for obtaining a luminescent composition, comprising the steps of:
   a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
   b) mixing one of said first luminescent material or said precursor thereof and said second luminescent material or said precursor thereof, with said precursor of an oxide material,
   c) curing said precursor of said oxide material to obtain a cured particle, said cured particle comprising one of said first luminescent material or said precursor thereof and said second luminescent material or said precursor thereof, and a coating of said oxide material,
   d) mixing said cured particle with the other luminescent material or said precursor thereof, wherein said other luminescent material or said precursor thereof is optionally coated with an oxide material having a melting point of at least 700 °C, and
   e) heating said mixture at at least 200 °C,
      wherein said first luminescent material is capable of emitting light in a first wavelength range, and said second luminescent material being capable of absorbing light in a second wavelength range, and having an emission spectrum which overlaps at least partly with one or more of the excitation bands of said first luminescent material.
13. The method according to any of clauses 8 to 12, wherein said first luminescent material or said precursor thereof, and/or said second luminescent material or said precursor thereof, is provided as particles, and the Dso value of the smallest dimension of said particles is ≥ 0.5 nm and ≤ 50 nm, preferably ≥ 0.5 nm and ≤ 10 nm, as measured using transmission electron microscopy (TEM).
14. The method according to any one of clauses 8 to 13, wherein said precursor of an oxide material is selected from the groups of organosilicates, silicon salts, aluminium salts, phosphate salts, and magnesium salts, preferably wherein said salts are selected from nitride salts or chloride salts, and/or said precursor is an ester of orthosilicic acid.
15. The method according to any one of clauses 8 to 14, wherein said step c) comprises a hydrolysis reaction, preferably wherein said oxide material is silica and step c) comprises adding ammonia to cure the precursor of said oxide material
16. The method according to any one of clauses 8 to 15, further comprising drying and grinding the particles after curing step c), and/or grinding the particles after heating step d) or heating step e).
17. The method according to any one of clauses 8 to 16, wherein said heating comprises heating at a temperature of at least 500 °C, preferably at least 600 °C, and preferably at a temperature of less than 2000 °C, more preferably of less than 1500 °C.
18. The method according to any one of clauses 8 to 17, wherein said heating comprises heating for at least one minute, preferably for at least 5 minutes.
19. The method according to any one of clauses 8 to 18, wherein said heating is at least partly performed under reducing atmosphere.
20. Light emitting device comprising composite luminescent particles according to any one of clauses 1 to 6 or said luminescent composition according to clause 7, and a violet and/or blue light emitting semiconductor material.
21. A system comprising composite luminescent particles according to any one of clauses 1 to 6, the luminescent composition according to clause 7, and/or a light emitting device according to clause 20, the system being one or more of the following:
   a. office lighting systems
   b. household application systems
   c. shop lighting systems,
   d. home lighting systems,
   e. accent lighting systems,
   f. spot lighting systems,
   g. theatre lighting systems,
   h. fibre-optics application systems,
   i. projection systems,
   j. self-lit display systems,
   k. pixelated display systems,
   l. segmented display systems,
   m. warning sign systems,
   n. medial lighting application systems,
   o. indicator sign systems, and
   p. decorative lighting systems
   q. portable systems
   r. automotive applications
   s. green house lighting systems
   t. display backlighting
   u. emissive displays
   v. microLEDs
22. Use of the composite luminescent particles according to any one of clauses 1 to 6, or said luminescent composition according to clause 7, as a taggant, for example in applications such as anti-counterfeiting.

### EXAMPLES

In the examples, the following particles were used:

LaPO₄:50%Tb nanoparticles having ethylene glycol ligands were obtained according to the procedure of EP 3623449 A1, the particles were spherical in shape and had a D₅₀ value of the smallest dimension of 10 nm.

Y₂O₃:15%Eu nanoparticles were obtained according to the procedure of EP3922698A1, the particles were of a platelet shape, were less than 1000 nm wide, and less than 10 nm thick.

Y₃Al₅O₁₂ nanoparticles were obtained according to the procedure of pending application EP22152028, the particles were spherical in shape and had a D₅₀ value of the smallest dimension of 10 nm.

### Comparative Example A: Well-mixed luminescent composition of 1:1 LaPO₄:50%Tb and Y₂O₃:15%Eu

In a glass vial, 100 mg of LaPO₄:50%Tb nanoparticles and 100 mg of Y₂O₃:15%Eu nanoparticles were weighed and dispersed using 5 mL of water. The vial was then ultrasonicated for 90 minutes. The water was allowed to completely evaporate at 105 °C under mild stirring. The powder was then ground using an agate mortar and pestle, and analyzed.

The emission spectra showed Eu³⁺ emission sensitized via Tb³⁺ excitation (IFRET) (Figure 1, dotted line).

### Comparative Example B: Well-mixed luminescent composition of 3:1 LaPO₄:50%Tb and Y₂O₃:15%Eu

In a glass vial, 300 mg of LaPO₄:50%Tb nanoparticles and 100 mg of Y₂O₃:15%Eu nanoparticles were weighed and dispersed using 5 mL of water. The vial was then ultrasonicated for 90 minutes. The water was allowed to completely evaporate at 105 °C under mild stirring. The powder was then ground using an agate mortar and pestle, and analyzed.

The emission spectrum showed improved Eu³⁺ emission over Example A (Figure 2, dashed line).

### Comparative Example C: annealing of the luminescent composition of Example A

A sample was prepared according to Comparative Example A. The sample was placed into an alumina crucible and transferred to an oven. The annealing was performed at 600 °C for 2 hours in air atmosphere and cooled to room temperature.

The annealed sample changed from a white powder before annealing, to brown after the annealing step. The brown coloration hints towards ion diffusion during annealing, thus forming traces of another compound, such as Y₂O₃:Tb, which possess Tb⁴⁺ impurity ions leading to brown coloration. The photoluminescence properties also significantly deteriorated.

In further experiments, different annealing temperatures were investigated (500, 600, 700, 800, 1000, 1200 °C) in air, as well as in reducing atmosphere settings. The reducing atmosphere annealing was performed using carbon powder in a double crucible setting, where the crucible with the sample was placed inside a bigger crucible with carbon powder in it and covered with a lid. In all cases, the annealed samples did not show improvement in photoluminescence properties compared to Comparative Example A.

### Comparative Example D: Annealing of a luminescent composition comprising Y₃Al₅O₁₂:Ce³⁺ and Y₂O₃:Eu³⁺ without silica matrix

In a glass vial, 100 mg of YAG:3%Ce³⁺ nanoparticles and 100 mg of Y₂O₃:Eu³⁺ nanoparticles were weighed and dispersed in 5 mL water. The vial was then ultrasonicated for 90 minutes. The liquid was allowed to completely evaporate at 105 °C under mild stirring. The dried powder was then ground using an agate mortar and pestle. The powder was transferred to an alumina crucible and then placed into an oven. The sample was annealed at 1300 °C for 2 hours under reducing atmosphere using carbon powder in a double crucible setting, where the crucible with the sample was placed inside a bigger crucible with carbon powder in it and covered with a lid.

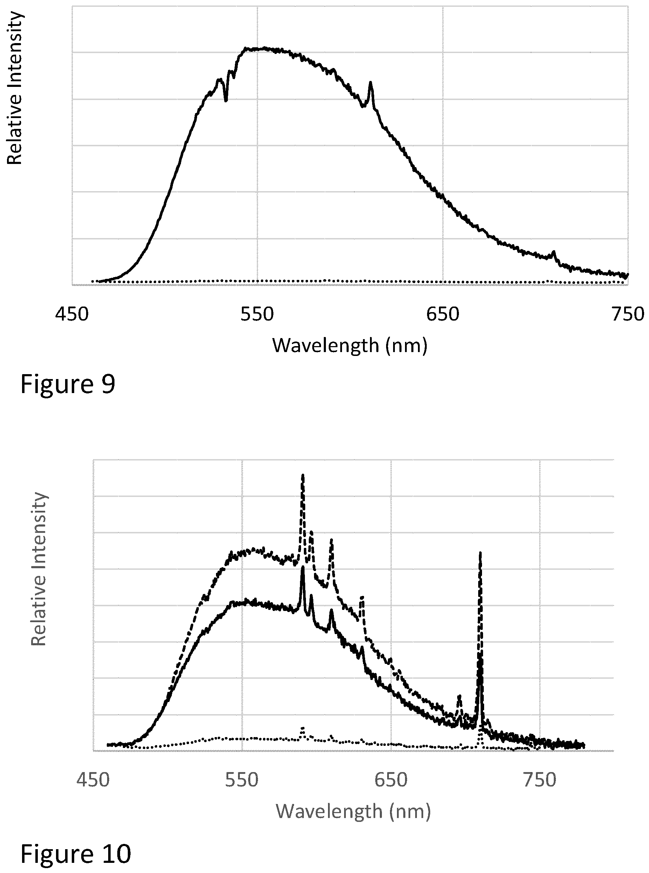

The annealed powder was bright yellow in color, but non-luminescent upon Ce³⁺ excitation at 450 nm (dotted line in Figure 9). The absence of Ce³⁺ luminescence hints to metal-to-metal charge transfer type quenching of Ce³⁺. This suggests Ce³⁺ and Eu³⁺ ions are in too close proximity to each other.

### Comparative Example E: Annealing of a luminescent composition comprising Y₃Al₅O₁₂:Ce³⁺,Tb³⁺ and Y₃Al₅O₁₂:Eu³⁺,Tb³⁺ without silica matrix

In a glass vial, 50 mg of YAG:0.1%Ce³⁺,50%Tb³⁺ nanoparticles and 100 mg of Y₃Al₅O₁₂:20%Eu³⁺,30%Tb³⁺ nanoparticles were weighed and dispersed in 5 mL water. The vial was then ultrasonicated for 90 minutes. The liquid was allowed to completely evaporate at 105 °C under mild stirring. The dried powder was then ground using an agate mortar and pestle. The powder was transferred to an alumina crucible and then placed into an oven. The sample was annealed at 1025 °C for 6 hours under reducing atmosphere using carbon powder in a double crucible setting, where the crucible with the sample was placed inside a bigger crucible with carbon powder in it and covered with a lid.

The annealed powder was light yellow in color, but showed weak luminescence upon Ce³⁺ excitation at 440 nm (dotted line in Figure 10). The weak Ce³⁺ luminescence hints to quenching of Ce³⁺, most probably due to metal-to-metal charge transfer interactions. This suggests Ce³⁺ and Eu³⁺ ions are in close proximity to each other.

### Luminescent particles comprising one luminescent material

### Example 1: Annealing of Y₂O₃:15%Eu nanoparticles with silica matrix encapsulation

In a glass vial, 60 mg Y₂O₃:15%Eu nanoparticles were weighed. In the vial, 1 mL water and 1 mL ethanol were added and shaken well. Then, 50 µL of TEOS was added dropwise to the vial under mild stirring. The vial was then ultrasonicated for 5 minutes, after which 1 mL of ammonia solution (32% ammonia in water) was slowly added dropwise to the vial under constant stirring. The vial was allowed to stir for 30 minutes. After stirring, the solvents were allowed to completely evaporate by drying at 105 °C under mild stirring. The obtained powder was ground using a mortar and pestle and transferred to an alumina crucible. The crucible was then placed inside an oven and annealed at 1000 °C for 8 hours in reducing atmosphere following the carbon double crucible setup discussed above, and then let to cool down to room temperature. The powder was ground again using a mortar and pestle and analyzed.

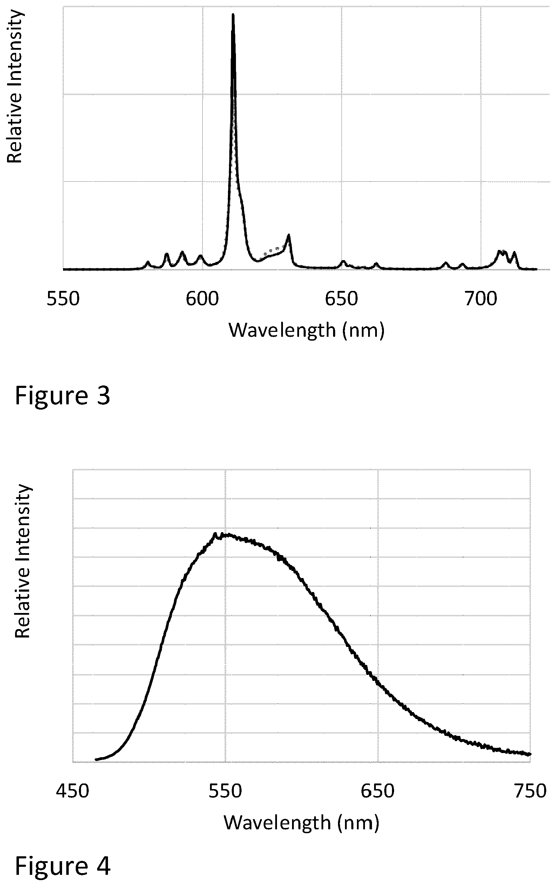

The annealed sample remained white in color and showed photoluminescence with increased intensity compared to the Y₂O₃:15%Eu nanoparticles before encapsulation or annealing. This can be seen in Figure 3, where the particles of Example 1 are in a solid line, and the untreated Y₂O₃:15%Eu nanoparticles are in a dotted line.

### Example 2: Annealing of YAG:1%Ce nanoparticles with silica matrix encapsulation

In a glass vial, 30 mg of Y₃Al₅O₁₂:1%Ce nanoparticles were weighed. In the vial, 1 mL water and 1 mL ethanol were added and shaken well. Then, 50 µL of TEOS was added dropwise to the vial under mild stirring. The vial was then ultrasonicated for 5 minutes, after which 1 mL of ammonia solution (32% ammonia in water) was slowly added dropwise to the vial under constant stirring. The vial was allowed to stir for 30 minutes. After stirring, the solvents were allowed to completely evaporate by drying at 105 °C under mild stirring. The obtained powder was ground using a mortar and pestle and transferred to an alumina crucible. The crucible was then inserted inside an oven and annealed at 1000 °C for 8 hours in reducing atmosphere following the carbon double crucible setup discussed above, and then let to cool down to room temperature. The powder was ground again using an agate mortar and pestle and analyzed.

The annealed sample exhibited light yellow color and showed bright photoluminescence (emission spectrum shown in Figure 4).

### Luminescent particles comprising multiple luminescent materials

### Example 3: Luminescent particles comprising LaPO₄:Tb and Y₂O₃:Eu, from single dispersion

In a glass vial, 150 mg of LaPO₄:50%Tb and 50 mg of Y₂O₃:15%Eu nanoparticles were weighed and dispersed in 5 mL of water. The vial was then ultrasonicated for 90 minutes. The water was then partially evaporated to a total sample volume of 3 mL. Then, 3 mL of ethanol was added to the vial and mixed well. 150 µL TEOS was taken in a pipette and added dropwise to the vial under mild stirring. At the end of the addition, the vial was sonicated for 5 minutes.

Then, 3 mL of ammonia solution (32 wt.% ammonia in water) was added slowly to the vial under constant stirring in drops. The sample was stirred for another 30 minutes and then dried at 105 °C under mild stirring. The obtained powder was then ground using an agate mortar and pestle and transferred to an alumina crucible. The crucible was inserted inside an oven. The sample was annealed at 700 °C for 10 minutes in reducing atmosphere, using the carbon double crucible setting discussed above, and then let to cool down to room temperature. The powder was then ground again using an agate mortar and pestle and analyzed.

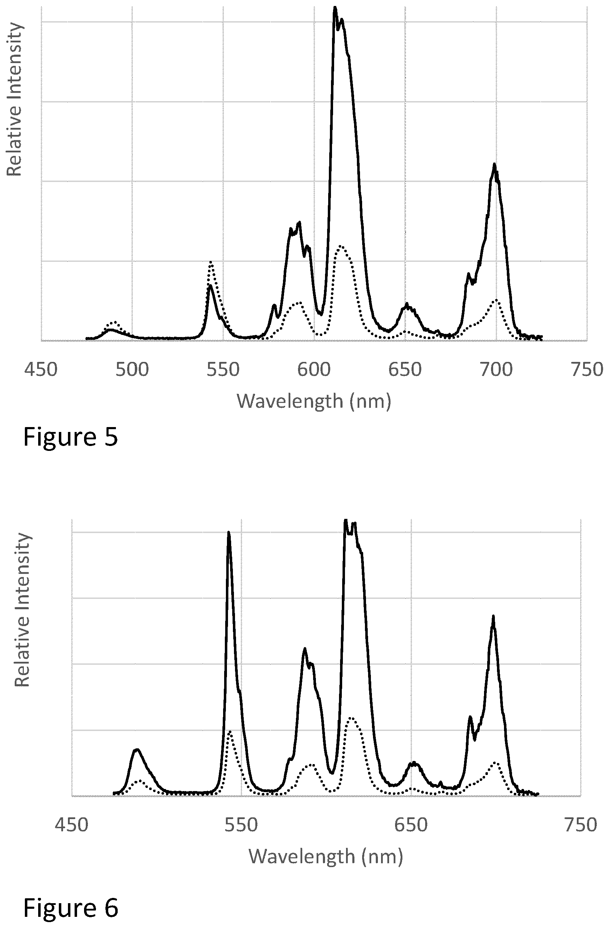

The annealed sample remained white in color. The sample showed photoluminescence with improved intensity and energy transfer efficiency: In Figure 5, the sample of Example 3 is shown in a solid line, and the sample of Comparative Example B in a dotted line. The photoluminescence intensity improved by about 5-fold compared to Comparative Example B and photoluminescence quantum efficiency improved by 3-fold compared to Comparative Example B.

### Example 4: Luminescent particles comprising LaPO₄:Tb and Y₂O₃:Eu, from 2 dispersions, cured as a single dispersion

150 mg of LaPO₄:50%Tb nanoparticles were weighed in one glass vial, and in another glass vial, 50 mg of Y₂O₃:15%Eu nanoparticles were weighed. 1.5 mL water and 1.5 mL ethanol were added to each vial. The dispersions were shaken before 75 µL of TEOS was added dropwise to each vial under mild stirring. The vials were then ultrasonicated for 5 minutes.

The dispersions of the vials were mixed and ultrasonicated for 90 minutes. Then, 3 mL of ammonia solution (32% ammonia in water) was added to the vials under constant stirring in a slow dropwise method. The stirring was continued for 30 more minutes. Drying was carried out at 105 °C under mild stirring. The obtained powder was ground using an agate mortar and pestle, transferred to an alumina crucible and annealed at 700 °C for 10 minutes in reducing atmosphere following the carbon double crucible setting discussed above. The sample was allowed to cool down to room temperature. The powder was then ground again using an agate mortar and pestle and analyzed.

The annealed sample remained white in color and showed photoluminescence with improved intensity compared to Comparative Example A and a moderate energy transfer efficiency, as can be seen from Figure 6, where Example 4 is shown in solid line and Comparative Example B in dotted line.

### Example 5: Luminescent particles comprising LaPO₄:Tb and Y₂O₃:Eu, from 2 dispersions, cured separately

In a glass vial, 150 mg of LaPO₄:50%Tb nanoparticles were weighed, and, in another glass vial, 50 mg of Y₂O₃:15%Eu nanoparticles were weighed. In each vial, 1.5 mL water and 1.5 mL ethanol were added and the vials were shaken well. Then, 75 µL of TEOS was added dropwise to each vial under mild stirring. The vials were then ultrasonicated for 5 minutes, after which 1.5 ml ammonia solution (32% ammonia in water) was dropwise slowly added to each vial under constant stirring. Both vials were allowed to stir for 30 minutes.

After stirring, the dispersions of both vials were mixed and ultrasonicated for 90 minutes. Then, the liquids were allowed to completely evaporate by drying at 105 °C under mild stirring. The obtained powder was ground using an agate mortar and pestle and transferred to an alumina crucible. The crucible was then inserted inside an oven and annealed at 700 °C for 10 minutes in reducing atmosphere using the carbon double crucible setup discussed above, and allowed to cool down to room temperature. The powder was ground again using a mortar and pestle and analyzed.

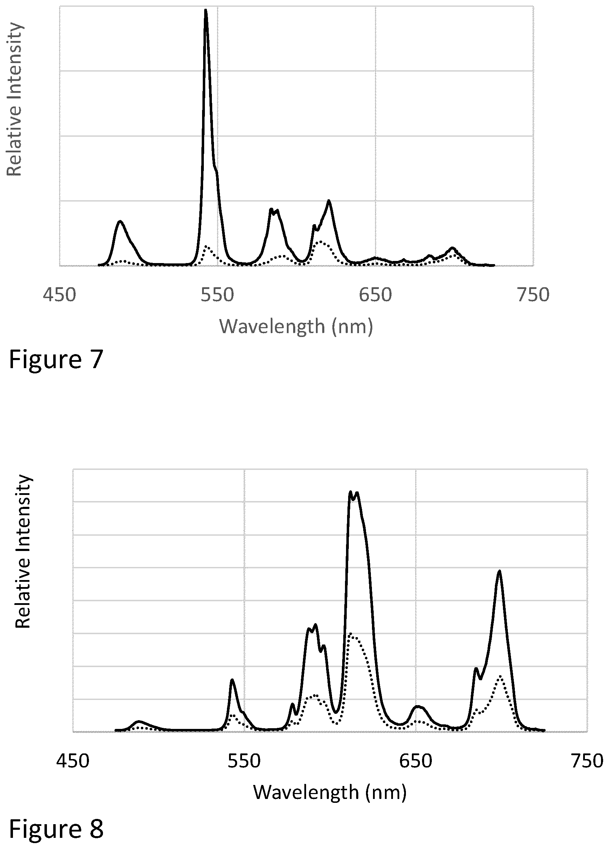

The annealed sample remained white in color and showed photoluminescence with increased intensity and relatively less energy transfer efficiency compared to Comparative Example B. In Figure 7, Comparative Example B is shown as the dotted line, and Example 5 is shown as the solid line.

### Example 6: Luminescent particles comprising LaPO₄:Tb and Y₂O₃:Eu, from 2 dispersions, cured as a single dispersion, longer stirring time

In a glass vial, 150 mg of LaPO₄:50%Tb nanoparticles were weighed, and in another glass vial, 50 mg of Y₂O₃:15%Eu nanoparticles were weighed. To each vial, 1.5 mL water and 1.5 mL ethanol was added. The dispersions were shaken well, after which 75 µL of TEOS was added dropwise to each vial under mild stirring. The vials were then ultrasonicated for 5 minutes and allowed to stir for 5 hours.

After stirring, the dispersions of both vials were mixed and ultrasonicated for 90 minutes. Drying was carried out at 105 °C under mild stirring. The obtained powder was ground using an agate mortar and pestle and transferred to an alumina crucible and annealed at 700 °C for 10 minutes under reducing atmosphere following the carbon double crucible setup discussed above, and let to cool down to room temperature. The powder was ground again using a mortar and pestle and analyzed.

The annealed sample remained white in color and showed photoluminescence with improved intensity. Figure 8 shows the sample of Example 6 in solid line, and the sample of Example 3 in dotted line. The energy transfer efficiency was improved compared to Example 4. The photoluminescence intensity improved by about 10-fold compared to Comparative Example B, and the photoluminescence quantum efficiency improved by 4 times compared to Comparative Example B.

### Example 7: Luminescent particles comprising YAG:Ce,Tb and Y₂O₃:Eu, from 2 dispersions, cured separately

In a glass vial, 30 mg of YAG:1%Ce,30%Tb nanoparticles were weighed. In another glass vial, 60 mg of Y₂O₃:15%Eu nanoparticles were weighed. 1 mL water and 1 mL ethanol were added to each vial. The dispersions were shaken well, after which 50 µL of TEOS was added dropwise to each vial under mild stirring. The vials were then ultrasonicated for 5 minutes. Then, 1 mL ammonia solution (32% ammonia in water) was dropwise slowly added to each vial under constant stirring. Both vials were allowed to stir for 30 minutes.

After stirring, the dispersions of both vials were mixed and ultrasonicated for 90 minutes. the solvents were allowed to completely evaporate by drying at 105 °C under mild stirring. The obtained powder was ground using a mortar and pestle, transferred to an alumina crucible and annealed at 1000 °C for 8 hours under reducing atmosphere following the carbon double crucible setup discussed above, and then let to cool down to room temperature. The powder was ground again using a mortar and pestle and analyzed.

The annealed sample exhibited a light yellow color and showed bright photoluminescence under YAG:Ce³⁺ excitation. Figure 9 shows the emission spectrum when excited at 440 nm of Example 7 (solid line), and of Comparative Example D (dotted line). Eu³⁺ emission can be observed.

### Example 8: Luminescent particles comprising YAG:Ce,Tb and Y₂O₃:Eu, from 2 dispersions, cured separately, longer stirring time

In a glass vial, 30 mg of YAG:1%Ce,30%Tb nanoparticles were weighed. In another glass vial, 60 mg of Y₂O₃:15%Eu nanoparticles were weighed. 1 mL water and 1 mL ethanol were added to each vial. The dispersions were then shaken well, after which 50 µL of TEOS was added dropwise to each vial under mild stirring.

The vials were then ultrasonicated for 5 minutes and allowed to stir for 5 hours. After stirring, the dispersions of the vials were mixed and ultrasonicated for 90 minutes, after which the solvents were allowed to completely evaporate by drying at 105 °C under mild stirring. The obtained powder was ground using a mortar and pestle and transferred to an alumina crucible. The sample was annealed at 1000 °C for 8 hours under reducing atmosphere using the carbon double crucible setup discussed above and let to cool down to room temperature. The powder was ground again using a mortar and pestle and analyzed.

The annealed sample exhibited light yellow color. The emission intensity under Ce³⁺ excitation at 440 nm was decreased compared to Example 7.

### Example 9: Luminescent particles comprising YAG:Ce,Tb and YAG:Eu,Tb, from 2 dispersions, cured separately

In a glass vial, 30 mg of YAG:0.1%Ce,50%Tb nanoparticles were weighed. In another glass vial, 60 mg of YAG:20%Eu,30%Tb nanoparticles were weighed. 1 mL water and 1 mL ethanol were added to each vial. The dispersions were shaken well, after which 50 µL of TEOS was added dropwise to each vial under mild stirring. The vials were then ultrasonicated for 5 minutes and allowed to stir for 30 minutes. Then, 1 mL ammonia solution (32% ammonia in water) was dropwise slowly added to each vial under constant stirring. Both vials were allowed to stir for 30 minutes.

After stirring, the dispersions of both vials were mixed and ultrasonicated for 90 minutes. the solvents were allowed to completely evaporate by drying at 105 °C under mild stirring. The obtained powder was ground using a mortar and pestle, transferred to an alumina crucible and annealed at 1025 °C for 6 hours under reducing atmosphere following the carbon double crucible setup discussed above, and then let to cool down to room temperature. The powder was ground again using a mortar and pestle and analyzed.

The annealed sample exhibited a light yellow color and showed bright photoluminescence under YAG:Ce³⁺ excitation. Figure 10 shows the emission spectrum when excited at 440 nm of Example 9 (solid line), Example 10 (dashed line), and of Comparative Example E (dotted line). The Eu³⁺ line emission under Ce³⁺ excitation at 440 nm due to iFRET can be observed.

### Example 10: Luminescent particles comprising YAG:Ce,Tb and YAG:Eu,Tb, from 2 dispersions with lower silica contents, cured separately

In a glass vial, 30 mg of YAG:0.1%Ce,50%Tb nanoparticles were weighed. In another glass vial, 60 mg of YAG:20%Eu,30%Tb nanoparticles were weighed. 0.25 mL water and 0.25 mL ethanol were added to each vial. The dispersions were shaken well, after which 12.5 µL of TEOS was added dropwise to each vial under mild stirring. The vials were then ultrasonicated for 5 minutes and allowed to stir for 30 minutes. Then, 0.25 mL ammonia solution (32% ammonia in water) was dropwise slowly added to each vial under constant stirring. Both vials were allowed to stir for 30 minutes.

After stirring, the dispersions of both vials were mixed and ultrasonicated for 90 minutes. the solvents were allowed to completely evaporate by drying at 105 °C under mild stirring. The obtained powder was ground using a mortar and pestle, transferred to an alumina crucible and annealed at 1025 °C for 6 hours under reducing atmosphere following the carbon double crucible setup discussed above, and then let to cool down to room temperature. The powder was ground again using a mortar and pestle and analyzed.

The annealed sample exhibited a light yellow color and showed bright photoluminescence under YAG:Ce³⁺ excitation. Figure 10 shows the emission spectrum when excited at 440 nm of Example 10 (dashed line), Example 9 (solid line) and of Comparative Example E (dotted line). The Eu³⁺ line emission under Ce³⁺ excitation at 440 nm due to iFRET can be observed. The emission intensity of Ce³⁺ emission is increased over Example 9, probably due to less dilution because of the lower silica contents. The iFRET Eu³⁺ line emission is also improved suggesting improved energy transfer for lower silica contents owing to thin silica shells separating donor and emitter nanoparticles.

## Claims

1. A composite luminescent particle comprising (i) a first luminescent material which is a rare-earth, s2-configuration ion or transition metal doped phosphor material, (ii) a second luminescent material which is a rare-earth, s2-configuration ion or transition metal doped phosphor material, and further comprising (iii) a coating of an oxide material having a melting point of 700 °C or higher,
wherein the D₅₀ value of said composite luminescent particle is ≥ 1 nm and ≤ 100 µm, as measured using transmission electron microscopy (TEM).

2. The composite luminescent particle according to claim 1, wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material,
preferably wherein the first luminescent material and the second luminescent material are so arranged with respect to each other to allow non-radiative energy transfer from the second luminescent material to the first luminescent material.

3. The composite luminescent particle according to claim 2, wherein the first luminescent material and the second luminescent material form separate domains within the oxide material, wherein said domains have dimensions, and the D₅₀ value of the smallest dimension of said domains is ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM).

4. The composite luminescent particle according to any preceding claim, wherein the D₅₀ value of the composite luminescent particle is ≥ 1 nm and ≤ 50 µm, more preferably ≥ 20 nm and ≤ 10 µm, most preferably ≥ 50 nm and ≤ 10 µm, as measured using transmission electron microscopy (TEM).

5. A luminescent composition, comprising (i) a first luminescent material which is a rare-earth, s2-configuration ion or transition metal doped phosphor material, (ii) a second luminescent material which is a rare-earth, s2-configuration ion or transition metal doped phosphor material,
wherein at least one of said first luminescent material or said second luminescent material is comprised in a particle coated with (iii) an oxide material having a melting point of 700 °C or higher, and wherein the D₅₀ value of said coated particle is ≥ 1 nm and ≤ 100 µm, as measured using transmission electron microscopy (TEM), preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material.

6. The composite luminescent particle of any of claims 1 to 4, or the luminescent composition of claim 5, wherein said first luminescent material and/or said second luminescent material is selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these,
preferably selected from the group of oxides, garnets, phosphates, vanadates, or a combination thereof,
more preferably selected from the group consisting of Y₃Al₅O₁₂, Lu₃Al₅O₁₂, Y₂O₃, YVPO₄, YVO₄, or LaPO₄, or a combination thereof.

7. The composite luminescent particle according to any of claims 1 to 4 or 6, or the luminescent composition of claim 5 or 6, wherein the oxide material is selected from the group of silicon oxides, aluminium oxides, phosphates, or magnesium oxide.

8. A method for obtaining composite luminescent particles, comprising the steps of:
a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
b) mixing said first luminescent material or said precursor thereof, said second luminescent material or said precursor thereof, and said precursor of an oxide material,
c) curing said precursor of said oxide material to obtain a cured particle, said cured particle comprising said first luminescent material or said precursor thereof, said second luminescent material or said precursor thereof, and a coating of said oxide material, and
d) heating said cured particle at at least 200 °C.

9. The method according to claim 8, wherein said first luminescent material is capable of emitting light in a first wavelength range, and said second luminescent material being capable of absorbing light in a second wavelength range, and having an emission spectrum which overlaps at least partly with one or more of the excitation bands of said first luminescent material.

10. The method according to claim 8 or 9, wherein the method step b) is performed in a single step such that a single mixture is formed.

11. The method according to claim 8 or 9, wherein the method step b) comprises:
b1) mixing in a first vessel said first luminescent material or said precursor thereof with said precursor of an oxide material, and in a second vessel mixing said second luminescent material or said precursor thereof with said precursor of an oxide material,
b2) optionally, at least partly curing at least one of said resultant mixtures,
b3) mixing said optionally at least partly cured mixtures.

12. A method for obtaining a luminescent composition, comprising the steps of:
a) providing (i) a first luminescent material, which is a rare-earth, s2-configuration ion or transition metal doped phosphor material, or a precursor of said first luminescent material; (ii) a second luminescent material, which is a rare-earth, s2-configuration ion or transition metal doped phosphor material, or a precursor of said second luminescent material; and further providing (iii) a precursor of an oxide material, wherein said oxide material has a melting point of at least 700 °C,
b) mixing one of said first luminescent material or said precursor thereof and said second luminescent material or said precursor thereof, with said precursor of an oxide material,
c) curing said precursor of said oxide material to obtain a cured particle, said cured particle comprising one of said first luminescent material or said precursor thereof and said second luminescent material or said precursor thereof, and a coating of said oxide material,
d) mixing said cured particle with the other luminescent material or said precursor thereof, wherein said other luminescent material or said precursor thereof is optionally coated with an oxide material having a melting point of at least 700 °C, and
e) heating said mixture at at least 200 °C,
wherein said first luminescent material is capable of emitting light in a first wavelength range, and said second luminescent material being capable of absorbing light in a second wavelength range, and having an emission spectrum which overlaps at least partly with one or more of the excitation bands of said first luminescent material.

13. The method according to any of claims 8 to 12, wherein said first luminescent material or said precursor thereof, and/or said second luminescent material or said precursor thereof, is provided as particles, and the D₅₀ value of the smallest dimension of said particles is ≥ 0.5 nm and ≤ 100 nm, preferably ≥ 0.5 nm and ≤ 50 nm, more preferably ≥ 0.5 nm and ≤ 10 nm, as measured using transmission electron microscopy (TEM).

14. The method according to any one of claims 8 to 13, wherein said precursor of an oxide material is selected from the groups of organosilicates, silicon salts, aluminium salts, phosphate salts, and magnesium salts, preferably wherein said salts are selected from nitride salts or chloride salts, and/or said precursor is an ester of orthosilicic acid, and/or wherein said step c) comprises a hydrolysis reaction, preferably wherein said oxide material is silica and step c) comprises adding ammonia to cure the precursor of said oxide material.

15. The method according to any one of claims 8 to 14, wherein said heating is at least partly performed under reducing atmosphere, and/or
wherein said heating comprises heating at a temperature of at least 500 °C, preferably at least 600 °C, and preferably at a temperature of less than 2000 °C, more preferably of less than 1500 °C, and/or,
wherein said heating comprises heating for at least one minute, preferably for at least 5 minutes.
